# EUROPEAN PATENT SPECIFICATION

(11) **EP 2 149 955 B1**
(45) Date of publication and mention of the grant of the patent: **12.03.2014**
(21) Application number: 09251709.3
(22) Date of filing: 02.07.2009
(51) Int. Cl.: H02H 7/30, H02H 1/00

(54) **An electrical protection arrangement for an electrical distribution network**
Elektrische Schutzanordnung für ein elektrisches Verteilernetzwerk
Agencement de protection électrique pour réseau de distribution électrique

(30) Priority: 31.07.2008 GB 0813916
(43) Date of publication of application: 03.02.2010
(73) Proprietor: Rolls-Royce plc, London SW1E 6AT (GB)
(72) Inventor: Booth, Campbell David, Clydebank G81 6BU (GB); MacKay, Andrew, Derby DE24 8YR (GB); Trainer, David Reginald, Derby DE24 0AQ (GB); Loddick, Sean Joseph, Rugby CV21 4BG (GB)
(74) Representative: Little, Thomas Andrew

(56) References cited:
- US-A1- 2007 002 506
- US-A1- 2007 008 670
- US-B1- 6 369 995

## Description

The present invention relates to an electrical protection arrangement for an electrical distribution network and a method of providing electrical protection in an electrical distribution network and more particularly to electrical protection arrangements and methods of providing electrical protection in compact electrical power distribution networks/systems.

It will be appreciated that electrical distribution networks are utilised in a range of environments. For example with regard to ships it will be appreciated an electrical distribution network is provided in which there is a radial architecture from electrical generators at relatively high voltages to electrical loads or electrical transformers at lower voltages. The electrical distribution network provides distribution of electrical power through a cascade of connections as indicated and may comprise a high voltage bus or medium voltage bus with trunking leading to low voltage electrical loads or electrical transformers. For example high electrical power may be required for propulsion drives whilst low electrical power may be required for such loads as heating or environmental control or lighting or other services within a ship or other host.

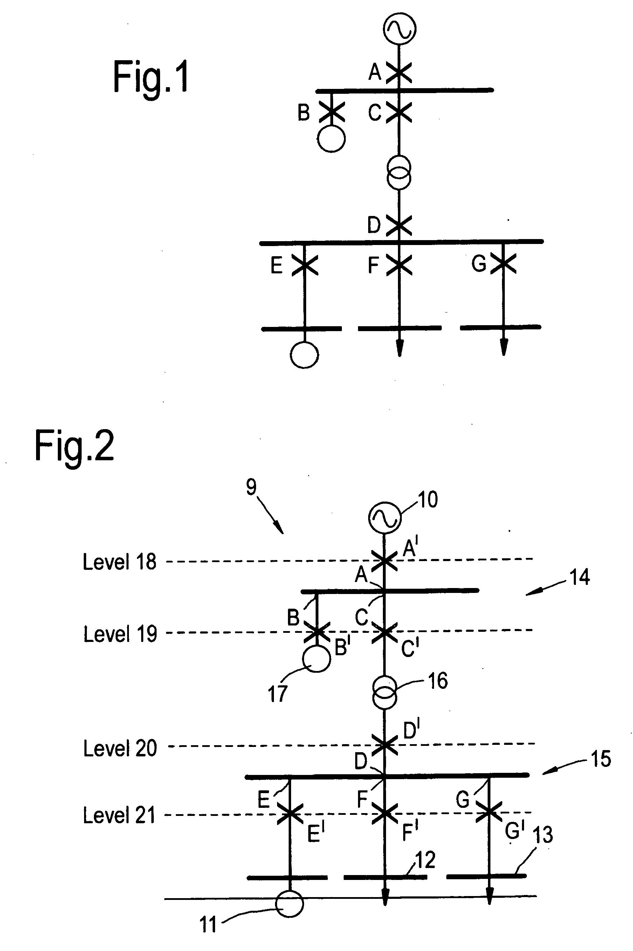

With such electrical distribution networks it will be understood that each connection can be considered a feeder in terms of an electrical generator or electrical load or electrical transformer having different requirements. Nevertheless, faults may occur at various points throughout the electrical distribution network and therefore an electrical protection system is required to protect the electrical distribution network/system as a whole from overloads or faults. Generally prior electrical protection arrangements have utilised current transformers and protection relays. Such arrangements detect faults and provide trip signals which are sent to circuit breakers which in turn isolate an individual element of the electrical distribution network from the remainder of the network. Generally, relays are located at known positions throughout the electrical distribution network. A simple electrical distribution network is illustrated at figure 1. It will be noted that items labelled A to G represent circuit breakers. Corresponding relays are located at the same positions as the circuit breakers. At lower voltages and for relatively low priority loads, integrated protection/circuit breaker devices or fuses may be used for short circuit protection purposes. Within a traditional electrical distribution network over current relays have an inverse time current characteristic. Furthermore such over current relays will typically possess a high speed definition time element to react quickly for a fault determined to be close to the relays measured point of switching. In such circumstances if the electrical current reaches a certain range then the relay will trip its associated electrical circuit breaker after a time dependent on the value of the electrical current level. Typically the higher the electrical current the shorter the trip time. Furthermore the associated relay will also be set to trip instantaneously if the electrical current exceeds a certain value. Such values for the relay can be adjusted manually either by changing the delay time or the electrical current threshold limit for tripping. It will be understood that typically the levels for the time delay and/or trip electrical current will be set dependent upon knowledge of an associated electrical distribution network/system.

Electrical protection arrangements as will be appreciated are preferred if they react quickly and have a sensitivity to faults but do not trip during normal conditions. Furthermore particular relays and associated circuit breakers should not trip for faults in adjacent electrical equipment unless specifically required for back up modes. Additionally it is advantageous if a relay/circuit breaker has an inherent back up capability in order that faults can be cleared from the arrangement in the event of a failure to operate one or more individual components of the protection arrangement.

Previous systems utilising over current relaying can provide protection to an entire system. However, such protection to the entire system means it is difficult to avoid disruption to the whole system when large parts of an electrical distribution network/system may be operating acceptably. Attempts have been made to co-ordinate relay/circuit breaker settings so that only relays electrically closest to a fault will trip. In such circumstances relays furthest away from the electrical generator will be set to trip quicker than relays closer to the source of electrical power during a fault. Such an arrangement as indicated attempts to ensure that essential parts of an electrical distribution network/system continue to operate after a fault has been cleared. For example with regard to figure 1 if a fault occurs at junction G of the electrical distribution network then relays A, C, D and G will detect an electrical fault current along the path from electrical generator/source to the fault. Relay G will then trip its associated circuit breaker first isolating the electrical fault before other relays A, C, D trip. However the fault may be located on the low voltage bus and in such circumstances relay D will trip before relay C, A. It will be understood that relays E, F and G will receive little to no current, as most of the electrical generator/source in such circumstances will be used to feed electrical power to the fault at the low voltage bus.

Although acceptable for most situations traditional electrical protection arrangements as described above are not ideal. For example with regard to ships it will be understood there is a desire to increase electrification in order to replace traditional mechanical and hydraulic systems with electrical servo equivalents. In such circumstances less space and weight will be associated with the system compared to previous mechanical and hydraulic systems. However, in order to provide more electrical systems on board a ship such as for electrical propulsion it will be understood that the increase in electrical load must be replicated by an increase in electrical power generation. Introduction of large electrical loads will require more power intense electrical distribution networks whilst in view of the limited distances low impedances will be presented by the cabling and otherwise of the distribution network. In such circumstances it will be understood that extremely high fault electrical currents may be presented. Furthermore electrical power generation output may change radically dependent upon operational conditions such as with regard to docking or at sea operations which in turn can lead to variable levels of electrical fault current. Finally, it will be understood that an increase in the number of non linear electrical loads introduced into an electrical distribution network can result in feedback currents, high in rush electrical currents, harmonics, voltage shifts and other potentially problematic phenomena with respect to an electrical distribution network which may cause erroneous or failure of tripping in an electrical protection arrangement. Limitation to time or electrical current graded protection system in such circumstances can lead to erroneous operation. In addition to the above it will be understood that some electrical power distribution networks incorporate fault current limiters, in line reactors and power electronic based current limiters whose effect may be to hamper setting and coordination of relay/electrical trip protection arrangements particularly dependent upon significant over current levels. Such an arrangement may limit tripping of existing electrical protection arrangements whilst faults will persist. It will also be understood with regard to electrical distribution networks ideally the electrical protection arrangement should be able to expand with expansion of the electrical distribution network whilst prior arrangements utilising relays/circuit breakers have had difficulties with regard to achieving consistent performance after expansion or upgrading occurs.

Different electrical distribution networks having hierarchical electrical protection arrangements are disclosed in the following prior art documents: US 20070008670, US 20070002506 and US 6369995.

In accordance with aspects of the present invention there is provided an electrical distribution network having an electrical protection arrangement, the electrical distribution network having a cascade of connections between an electrical source/electrical generator and an electrical load, the cascade of connections being arranged in a hierarchy of levels defined by respective connections to the electrical distribution network, each level in the hierarch of levels comprising at least one connection, the electrical protection arrangement comprising a plurality of electrical current flow detectors, a plurality of circuit breakers and a controller, each connection having an associated circuit breaker and an associated electrical current flow detector for determining the electrical current flow at the connection and being arranged to provide a level signal to the controller, the controller being arranged to analyse the level signals from the electrical current flow detectors in at least one level in the hierarchy of levels, the controller being arranged to provide a fault signal to the circuit breaker associated with a particular connection to isolate the electrical distribution network at the particular connection if the controller determines that the level signal provided by the associated electrical current flow detector indicates a fault at the particular connection and each electrical current flow detector being directly associated with the circuit breaker at its associated connection, each electrical current flow detector having a timer and a comparator whereby if the level signal is above a threshold value for a predetermined time as determined by the timer the electrical current flow detector being arranged to provide a trip signal to the circuit breaker to isolate the electrical distribution network at the associated connection.

Typically, the controller is arranged to analyse the level signals from the electrical current flow detectors sequentially through the hierarchy of levels. Alternatively, the controller is arranged to analyse the level signals from the electrical current flow detectors simultaneously through the hierarchy of levels.

Alternatively in accordance with aspects of the present invention there is provided a method of providing electrical protection in an electrical distribution network, the electrical distribution network having a cascade of connections between an electrical source/electrical generator and an electrical load, each connection having an associated circuit breaker, the method comprising arranging the cascade of connections in a hierarchy of levels defined by respective connections to the electrical distribution network, each level in the hierarchy of levels comprising at least one connection, determining an electrical current flow at each connection and providing a level signal for each connection, analysing the level signals for the connections in at least one level the hierarchy of levels, providing a fault signal to the circuit breaker associated with a particular connection to isolate the electrical distribution network at the particular connection if it is determined that the level signal provided for the particular connection indicates a fault at the particular connection, and determining if the level signal at each connection is above a threshold value for a predetermined time and if the level signal is above the threshold value for the predetermined time providing a trip signal to the circuit breaker to isolate the electrical distribution network at the associated connection.

Typically, a connection connects the electrical distribution network, an electrical load, an electrical transformer or an electrical generator or an electrical source.

Generally, the hierarchy of levels comprises a plurality of levels between the electrical source/electrical generator and the electrical load.

Typically, the electrical current flow detector is arranged to determine the direction of electrical current flow.

Typically, the level signal is binary.

Typically, the electrical current flow detector has an electrical current flow filter. Typically, the flow filter is a harmonic filter for electrical current.

Typically, the controller is arranged to terminate the analysis when the fault signal is provided by the controller to a circuit breaker.

Typically, the circuit breaker is a mechanical switch or a solid state switch.

Generally, the controller is arranged to repeat the analysis of the level signals a number of times for confirmation prior to providing the fault signal. Typically, the controller is arranged to analyse the level signal for each electrical current flow detector at predetermined time intervals.

Possibly, the controller has a time delay prior to providing the fault signal.

Possibly, at least one level in the hierarchy of levels has a tie line breaker.

Possibly, the controller is arranged to provide a fault signal to more than one circuit breaker.

Generally, the predetermined time for each electrical current flow detector in a level is the same. Possibly, the predetermined time for each electrical current flow detector in a level may be different from the predetermined time for electrical current flow detectors in other levels of the hierarchy of levels.

Possibly, the controller is arranged to provide an indication as to a connection and/or circuit breaker to which a fault signal has been provided.

Possibly the controller is arranged to analyse the level signals from electrical current flow detectors in each level up or down the hierarchy of levels from an initial level in the hierarchy of levels.

Generally, the electrical distribution network is a radial electrical distribution network for electrical power distribution. Typically, the electrical protection arrangement is provided within an electrical distribution network in a ship or an aircraft.

Embodiments of aspects of the present invention will now be described by way of example with reference to the accompanying drawings in which:
Figure 2 is a schematic illustration of a protection arrangement in accordance with aspects of the present invention;
Figure 3 is a schematic illustration of the protection arrangement depicted in figure 2 with an electrical fault;
Figure 4 is a schematic illustration of an alternative protection arrangement in which a tie breaker is provided within the distribution network;
Figure 5 provides a schematic illustration with regard to utilisation of a protection arrangement in a back up mode in accordance with aspects of the present invention;
Figure 6 provides a second alternative schematic illustration of a protection arrangement in accordance with aspects of the present invention; and
Figure 7 provides an illustration of an example look up table for operation of a protection arrangement in accordance with aspects of the present invention.

Aspects of the present invention relate to utilisation of a centralised control with coordination provided to protection devices at particular connections or junctions within a distribution network. Typically, the distribution network will be within a contained environment such as a ship or aircraft. Centralised approaches to protection arrangements have advantages with regard to coordinating operation over an entire network in comparison with effectively independent and uncoordinated operation of prior relay/circuit breaker arrangements at particular points within a network. However, it will be understood such centralisation comes with a cost in terms of installation and generally reliance upon a communication link to a central controller. Such communication links add risk in terms of potential failure in the communication link and so potentially undermine protection arrangements. However, within contained environments such as a ship such problems are less significant due to the limited physical size of the distribution network and communication distances. However in order to achieve effective operation of such distribution arrangements it will be understood that account must be taken of degradation or damage to the system for example through the loss of one or more communication links or the failure of one or more detectors/circuit breakers.

Aspects of the present invention utilise fault current flow detectors (FCFDs) which are located throughout a distribution network. The distribution network generally comprises a cascade of connections from an electrical source which is typically an electrical generator to electrical loads. Each connection can be considered a junction point to the electrical distribution network. Aspects of the present invention replace previous relays/fuses in terms of allowing selective and more specific isolation of parts of the distribution network should a fault occur. It will be understood that fault current flow detectors at least have the capability of detecting electrical current flow and normally of determining direction of such current flow which is particularly advantageous with regard to alternating electrical current distribution systems. Typically fault current flow detectors provide a simple binary level signal to a central controller. In such circumstances the detector provides a 0 or a 1 dependent upon the detected electrical current. The level signal is then utilised by the central controller in accordance with a fault location algorithm or strategy in order to send fault signals to appropriate circuit breakers to effect fault isolation whilst maintaining minimal disruption to the remaining parts of the distribution network which are operating correctly.

It will be understood that the purpose of the fault current flow detector is to detect when a fault electrical current passes through its measured location which as indicated typically can be defined as a respective junction to the distribution network. In such circumstances the detector operates by measuring the electrical current magnitude at that junction and then determining if it is above a predetermined threshold. Such determination or comparison preferably occurs at the detector such that a simple binary 1 or 0, that is to say "yes" "no" level signal is provided to the controller. An alternative would be to provide an analogue type level signal indicating electrical current magnitude at the junction such that the controller itself can determine whether it exceeds a predetermined threshold level or levels by comparison and will then forward the appropriate fault signal to the circuit breaker associated with the junction and therefore the detector. The level of the threshold for fault current is set as necessary to achieve acceptable operation. Typically the level will be determined by circuit analysis and testing in order to determine a minimum fault scenario with minimum generation connected and/or supply by an auxiliary source. The minimum threshold would therefore be applicable under all generation conditions and would not require reconfiguration for different operational scenarios. Such an approach will achieve a major benefit with regard to effective operation of a protection arrangement within a distribution network. Previous networks were required to consider at each relay/fuse different generation scenarios in order to avoid spurious or delayed operation. As fault current flow detectors are also capable of detecting the direction of current flow it will also be appreciated that these detectors can distinguish between current flow from the main generation source and electrical current flowing up from the distribution system from for example regenerative loads, low feedback generation and other potential sources. It will be appreciated an ability to detect electrical current direction will generally be important with regard to aspects of the present invention and particularly when utilising a location algorithm for determining operation of a circuit breaker device or similar. With regard to most electrical distribution systems and particularly well contained distribution systems such as used in ships it will be understood that there will be varying speed drives which may experience high harmonic content in the fault current. Such harmonic variations in the fault current must be accounted for with regard to achieving accurate fault detection.

As indicated above in a preferred embodiment a controller will receive a level signal in the form of a binary signal from a fault current flow detector. This binary signal will be a 0 for no fault current or reverse current flow or a 1 for a fault current detected, that is to say a fault current greater than a threshold as determined previously. The level signals will be utilised as an input in an appropriate response algorithm. The algorithm will be utilised in order to ascertain the location of a fault. The algorithm operates by dividing the distribution network into levels. Each fault current flow detector will be assigned to a level within the distribution network. It will be appreciated that as indicated generally there will be a cascade of connections between an electrical source and an electrical load. These connections will comprise electrical cabling to and from distribution bus bars and other typically radial distribution configurations. In such circumstances the cascade of connections as indicated will be physically or more normally allocated by software within the controller to a hierarchy of levels defined by respective connections to the distribution network in terms of stages or levels between the electrical source and the electrical load. In such circumstances each fault current flow detector is assigned to a level within the hierarchy of levels forming the distribution network. By such an approach the arrangement enables levels as indicated to reflect the position of the detector in the hierarchy.

Figure 2 provides a schematic illustration of a typical electrical distribution network 9 incorporating a connection arrangement in accordance with aspects of the present invention. Thus, an electrical generator 10 is provided at one end of the electrical distribution network 9 and electrical loads 11, 12, 13 are provided at the other end of a cascade of connections which define junctions within the electrical distribution network 9. It will be noted that a distribution bus 14 is provided with a generally high voltage level or medium voltage level and a distribution bus 15 with a relatively low voltage level provided to feed the electrical loads 11, 12, 13. An electrical transformer 16 is provided between the buses 14, 15 to step down the voltage from the bus 14 to the bus 15. It will be understood that electrical power is provided by the electrical generator 10 to the bus 14. The bus 14 itself may be associated with electrical loads such as a propulsion mechanism 17 taking power directly from the high or medium voltage level bus 14. In accordance with aspects of the present invention the electrical distribution network is configured into a hierarchy of levels 18, 19, 20, 21 and one or more connections A to G are provided in each level 18, 19, 20 and 21. In such circumstances the connections A to G within the electrical distribution network 9 between the electrical generator 10, the buses 14, 15, the electrical transformer 16 and the electrical loads 11, 12, 13 as indicated are configured either physically as will be described later or within software for integration into a hierarchy of levels for analysis. It will be understood that in the example depicted in figure 2 a first level 21 is defined by connections E, F and G between the bus 15 and the low voltage loads 11, 12, 13 and in such circumstances the fault current flow detectors E', F' and G' are provided at the connections E, F and G to the bus 15. Each level 18 to 21 boundary is defined by location of the fault current flow detectors A', B', C', D', E', F' and G' within the hierarchy of levels until an uppermost level 18 typically associated with the electrical power source or electrical generator 10 is reached.

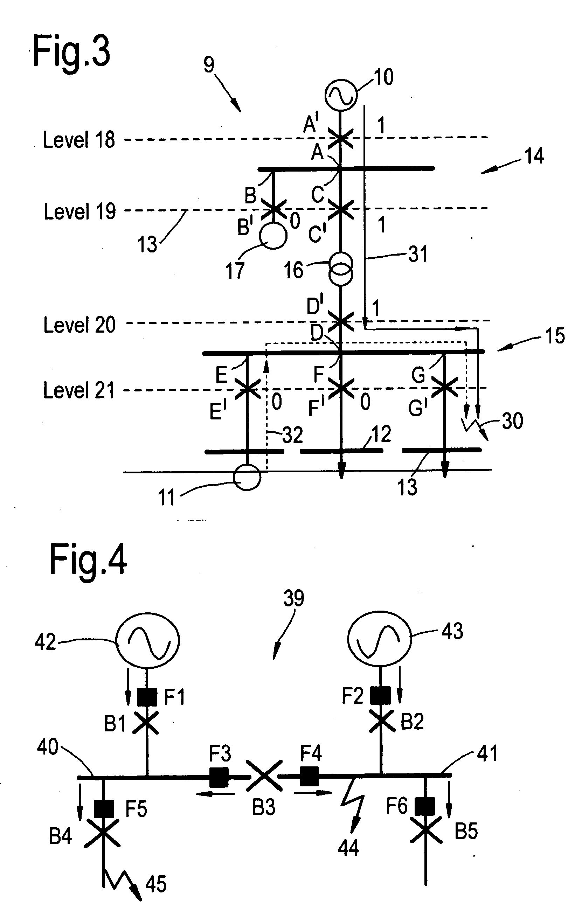

Operation is described with regard to figure 3, reflecting the electrical distribution network 9 as described above with regard to figure 2 with a fault 30 located towards the electrical load 13. In terms of operation an algorithm or analysis process considers the level value for each detector A' to G' and is operated simultaneously in order to define a fault location process. This fault location process generally is provided repeatedly at certain time intervals to achieve appropriate responsivity. The particular time interval will depend upon operational requirements but it will also be appreciated that the protection arrangement must be adequate to ensure damage to the electrical distribution network 9 is avoided. In such circumstances typically a time interval in the order of 1 millisecond may be utilised for fault location.

In terms of determining fault location it will be appreciated that the process initially looks to determine if a fault signal is present at one of the fault current flow detectors E' to G' at the connections E to G in the first level 21. If none of the fault current flow detectors E' to G' determines by a comparison between the measured electrical current and a threshold current that a level signal 1 should be provided to a controller then the process will move onto the next level 20 and read the fault current flow detector value D' at that level 20. This process is continued until the final level 18 or a fault is found. If a fault is found then the controller will send a fault signal which acts to trip an appropriate circuit breaker also indicated by A' to G' and this will generally terminate the process. To avoid spurious tripping in a practical application of a protection arrangement and method in accordance with aspects of the present invention generally a confirmatory time delay will be provided. In such circumstances as indicated above with the time period or time step between analysis steps a requirement for a continuous sequence of five or ten level outputs from a respective fault current flow detector A' to G' may be required before a tripping fault signal is provided by the controller. Terminating the location sequence or process prevents the fault current flow detectors at higher levels from being tripped spuriously. It will be understood that a fault current would be registered in any fault current flow detector G', D' C' and A' that is in the path from the electrical generator or electrical source 10 to the fault 30.

For example, operation of the location process will consider where the fault 30 occurs and therefore as indicated in figure 3 a fault current flow detector G' indicates a fault current above a level defined by a predetermined threshold current. The fault current will be detected at detectors A', C', D' and G' as these detectors are all in a path 31 of the fault current through the connections A, C, D and G of the electrical distribution network 9 in accordance with aspects of the present invention. At detector E' a high reverse current illustrated by path 32 may be detected due to a fault in feed from the electrical load 11 with an induction motor. However, the level signal given as an output from the fault current flow detector E' would remain at 0 due to the sensed direction of the fault current being in reverse to that required. As indicated in a preferred embodiment the fault current flow detectors will provide level signals in a binary form 1 for a current flow above the threshold current and 0 for other situations in effectively a "yes" or "no" scenario.

In terms of determining the fault location as indicated a process will begin by considering the fault current flow detectors E' to G' at the first level 21. This process will detect that detector G' is high and therefore through a controller a tripping fault signal provided to a circuit breaker G' associated with the detector G'. This process terminates and prevents further tripping of fault current flow detectors A', C', D' in the path 31. For illustration purposes if a fault were located on the bus 15 then the fault current flow detectors A', C', D' would be high and in such circumstances the process would scan level 21 and determine no fault current in the fault current flow detectors E', F', G'. In such circumstances the process would then proceed sequentially to level 20 and in such circumstances would determine through the fault current flow detector D' that a high fault current was present and in such circumstances a controller would then provide a tripping fault signal to an associated circuit breaker D' with the fault current flow detector D' after typically a confirmatory delay. Again once such a fault signal had been provided there would be termination of the process. In the above circumstances through sequential consideration of the levels 18 to 21 it will be understood that the associated circuit breaker A' to G' closest to a fault location in the flow path for the fault current will break or be triggered first causing minimal disruption to acceptably operating parts of an electrical distribution network.

It will be understood that aspects of the present invention effectively utilise a process and method which performs a loop check whereby each fault current flow detector is considered and checked level by level. In such circumstances although a fault current is detected on one or more fault current flow detectors in a certain level it breaks from the loop ensuring that it is the lowest possible level and therefore minimising disruption to other parts of the electrical distribution network which is triggered. It will be understood with previous arrangements each point in the fault current path would incorporate its own relay and circuit breaker and although relative time delays may be provided between these levels it is still possible that more than one circuit breaker will be triggered and therefore cause more systemic closure of the electrical distribution network than is necessary.

An alternative electrical distribution network 39 with a protection arrangement in accordance with aspects of the present invention is depicted in figure 4. In this arrangement a tie line breaker B3 is provided between distribution buses 40 and 41. Such a configuration allows separate electrical generators 42, 43 to be provided which notionally feed the buses 40, 41 in a radial electrical distribution network in order to provide electrical power to electrical loads. It will be understood that a tie line breaker B3 allows the buses 40, 41 to be isolated from each other should there be a divergence in one or other of the electrical generator 42, 43 sets. In accordance with aspects of the present invention provision of a tie line breaker B3 is further considered as a circuit breaker in accordance with aspects of the present invention. In such circumstances this tie line breaker B3 will act to define effectively a separate level within the hierarchy of levels for consideration by the controller. Thus, the tie line breaker B3 has fault current flow detectors F3, F4 at both sides connected generally in opposed directions. As indicated above the fault current flow detectors enable determination of the direction of electrical current flow and therefore will be utilised in accordance with aspects of the present invention in order to facilitate location of the fault and therefore trip only those parts of the electrical distribution network necessary. When a fault 44 is located on a bus 41 as illustrated for example a fault signal will be provided by a controller in order to trip both the tie line breaker B3 and the circuit breaker B2 at the next level.

In order to further demonstrate the process of a protection arrangement and method in accordance with the second embodiment defined in figure 4 as illustrated the tie line breaker B3 is provided upon a generator bus defined by respective buses 40, 41.

If a fault 45 occurs then a fault current flow detector F5 will register a fault current above a threshold and provide a level signal as an output. This level signal will be a 1 and will be received by the controller. The controller will ignore all fault current flow detectors F1, F3, F4, F2 above this level in the hierarchy of levels and will provide a fault signal to a circuit breaker B4 associated with the detector F5. Alternatively, if a fault 44 as described above occurs on the bus bar 41 then the fault current flow detector F4 will detect a fault current and provide a level signal to the controller but fault current flow detector F3 due to its directional sensitivity will not detect a fault current. In such circumstances the controller will provide a fault signal to fault current flow detector F4 in order to trip the tie line breaker B3 and the circuit breaker B2. The controller will trip through a fault signal both circuit breaker B2 and tie line breaker B3 through a common tripping circuit. Alternatively, for tie line fault current flow detectors F3, F4 an instruction to trip other circuit breakers could be initiated through the controller. Conversely, dependent upon connections it will be understood that the fault current flow detector F3 may be instructed to circuit breakers B1, B3 dependent upon requirements.

It will be understood by the embodiments of aspects of the present invention described above protection arrangements and methods in accordance with aspects of the present invention do not require any knowledge of topographical information about the electrical distribution network in order to proceed through the process provided during initial setup where each fault current flow detector is assigned an appropriate level. Furthermore, the number of fault current flow detectors required does not need to be known as long as it does not exceed the maximum allowed for the process in terms of response time capabilities of hardware and their performance limits. In such circumstances a generic organically expandable and easily adaptable protection arrangement and method is defined for an electrical distribution network. In such circumstances additional electrical generator and additional electrical loads or other networking can be provided within the electrical distribution network.

It will be appreciated that it is essential there is a communication link between a controller and each fault current flow detector in order to achieve operation of the arrangement. If the communication link fails it will be advantageous to provide a back up regime to ensure a minimum level of protection is provided for faults. In such circumstances in accordance with aspects of the present invention it is advantageous that each fault current flow detector is programmed to act essentially as a conventional over current relay with a defined time setting for utilisation in confirming that an electrical current above a threshold has been present for a particular period of time. In such circumstances should a communications link be lost between the fault current flow detector and the controller or if the fault current flow detector senses a fault current it will initially send an appropriate signal to the controller. If in response a fault signal is then not provided whilst the fault current is maintained the fault current flow detector itself after a particular time period will trigger the circuit breaker to protect the electrical distribution network.

Operation of the above described back up regime as indicated would depend upon provision of a certain time period for each fault current flow detector. This time period would be greater than the maximum fault isolation time to ensure all fault current flow detectors are still detecting a fault current flow. The fault current flow detector in such circumstances will trip the associated circuit breaker after a predetermined time delay which corresponds to the time period for the level of the fault current flow detector within the hierarchy of levels. In such circumstances the arrangement and method will ensure that fault location/detection times will be essentially uniform regards of the location of the fault. For example, fault current flow detectors at a first level may have a delay of 100 microseconds whilst fault current flow detectors at the next level may have a delay in the order of 200 microseconds and so forth. This grading of the time delay between levels in the hierarchy of levels is provided for illustration purposes and different time delays may be chosen for actual arrangements. Furthermore, the time delay can be varied for each fault current flow detector to provide a back up coordinated over current regime.

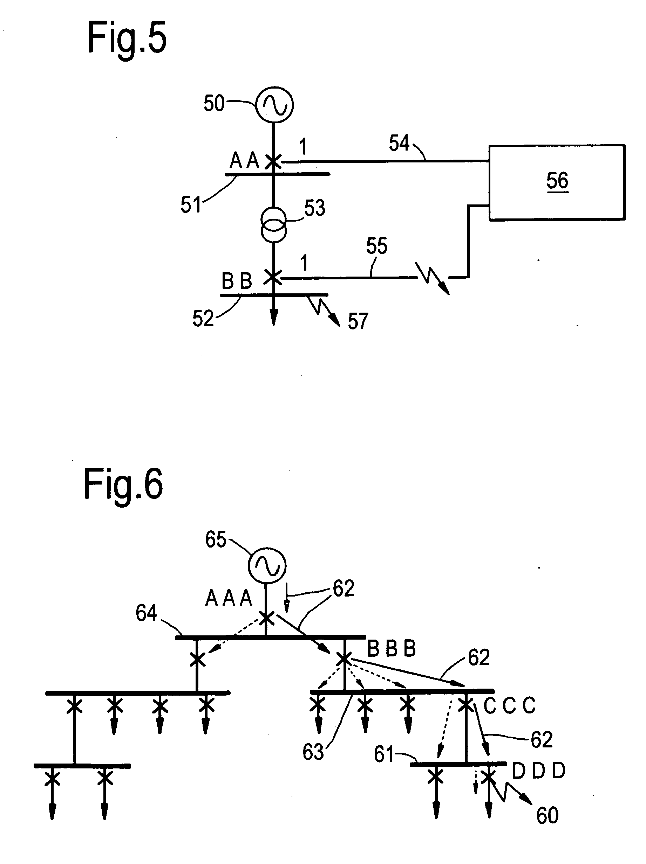

Figure 5 provides a schematic illustration of such a back up regime. It will be noted that the back up regime comprises a relatively simple element of the distribution network. Thus, an electrical generator 50 is coupled through appropriate connections to a high voltage bus 51 and a low voltage bus 52 via a transformer 53. Levels are defined by respective fault current flow detectors AA, BB. These detectors AA, BB are associated with respective communication links 54, 55 to a controller 56. In terms of back up operation if the communications link 55 should fail when a fault 57 occurs then the following process will be effective. Thus, the fault 57 will cause a fault current to be provided and detected by the fault current flow detectors AA, BB. Initially, the fault current flow detector BB will attempt to provide a level signal 1 to the controller 56 through the link 55. If this link 55 were not faulty then as indicated above the controller 56 would respond to the level signal from the fault current flow detector BB with a fault signal to trip an associated circuit breaker to the fault current flow detector BB. However, there are two typical scenarios for failure. If the fault current flow detector BB or its associated circuit breaker are faulty then the fault current flow detector AA will itself initiate the tripping of an associated circuit breaker after its predetermined time period. Such tripping of the circuit breaker will isolate more of the electrical distribution network than is necessary but will remove the fault nevertheless. As indicated above the time period before self tripping by a fault current flow detector of an associated circuit breaker will depend upon operational requirements and network topography.

Should the communication link 55 fail then it will be understood that typically some form of communication monitoring system will detect this failure and in such circumstances operation of the controller 56 may be disabled and the whole arrangement allowed to revert or fall back to a back up mode of operation such that the protection arrangement is maintained albeit in a none optimal fashion. In such circumstances each of the fault current flow detectors AA, BB will then after a sustained fault current above a threshold current has been detected for a time will trip the associated circuit breaker to isolate parts of the electrical distribution network. Finally, it will be appreciated that if the controller 56 fails or is instructed to be disabled as a result of a communications failure then as indicated the respective fault current flow detectors AA, BB will automatically trip their respective circuit breakers after the predetermined times. Typically there will be an increase in the predetermined times between the levels defined by the fault current flow detectors AA, BB in order to ensure the lowest level of circuit breaker is tripped isolating the minimum amount of the electrical distribution network to leave the remainder of the electrical distribution network operational.

Aspects of the present invention provide an arrangement and system which can be coordinated centrally allowing greater integrity and reliability with regard to identifying and managing fault conditions, minimising spurious operations more effectively than previous coordinated arrangements. A key advantage relates to the central controller coordination in that the controller has the ability to determine location of a fault in terms of electrical distribution network. If a fault occurs then the fault location can be immediately relayed to an operator through an appropriate indicator saving time with regard to locating the fault in the electrical distribution network in terms of equipment or apparatus or cable position. It will be understood a major disadvantage with previous over current regimes related to the use of delays/relays and means of coordination. The use of delays means that faults are present upon an electrical distribution network for longer especially near the generating levels where the delay was longest in order to attempt bias isolation to the lowest position necessary. These delays can cause major damage to electrical equipment. By provision of a centralised controller such delays should be reduced or eliminated. Thus the delay between fault occurrence and fault isolation should be less and consistent throughout the electrical distribution network.

Aspects of the present invention provide further flexibility with regard to the protection arrangement and method in order to address several problems associated with previous protection arrangements and methods. For example feedback currents, or currents from low level generation sources can cause problems with respect to aspects of the present invention but the provision of advantageously directional capability with regard to the fault current flow detectors allows avoidance of such problems. Furthermore, as indicated no topological information about the electrical distribution network is needed in order to consider the algorithm provided each fault current flow detector is assigned to an appropriate level in a hierarchy of levels at the outset. Such an arrangement provides a facility with regard to employment of aspects of the present invention in any feasible radial electrical distribution network with minimum of resetting and so will allow in such situations as a ship system growth with regard to additional electrical components when installed.

As indicated above where electrical propulsion systems are utilised typically a number of electrical generators will be provided whereby the electrical generators on line will vary dependent on the amount of connected electrical load necessary for the electrical propulsion system. In such circumstances there can be significant variations in the fault current level aspects of the present invention provided by protection arrangements. A method which can cope with such variations by discriminating the fault current level requirement in terms of a threshold level beyond which a level signal is given to a controller dependent upon the propulsion system status would be advantageous. Furthermore existing over current relay arrangements generally are set for a small range of fault levels making coordination difficult and may lead to non isolation of a fault or tripping of acceptably performing parts of an electrical distribution network.

It will be understood if a fault current limiting device is placed upon an electrical distribution network then situations may arise that the fault current is close to the maximum load current. With a traditional protection arrangement it is not possible to cope with this situation but in accordance with aspects of the present invention threshold levels and therefore trigger levels for fault location can be set so that fault location is possible even though there is a current limiting device. When a high impedance fault occurs all loads not in the path of the fault current will register a very low or no current at all. This means that the threshold level can be set to a very low level registering 0 for low to no current and 1 for normal to high current. Such an approach will register the same fault determination logic within the controller as if there were a normal faulted system in accordance with aspects of the present invention. It will be understood that the approach cannot be used in a non fault condition as normal load current will cause tripping or continuously tripping but if this was used in conjunction with a fault detecting device and most probably a fault current limiting device activation would only occur when necessary by activation of the controller to find and locate the fault.

A further alternative approach in accordance with aspects of the present invention utilises following a fault path of a fault current from generation to a fault location. As previously each fault current flow detector is reviewed at discrete time intervals but instead of processing it from lower levels to higher levels in the hierarchy of levels towards the generator it is processed from higher levels to lower levels in the hierarchy of levels. When a fault occurs, the fault current flow detector at the generation level will signal a high level signal to a controller indicating that a fault has occurred. In such circumstances the controller will then through an appropriate process consider each fault current flow detector immediately branched from such a location. If these values are high again indicating a fault then it will step down to the next level and repeat the process until none of the fault current flow detectors branching out are of a high level or there are no additional branches available indicating that there is a fault current at that connection location.

Figure 6 provides an illustration of this further embodiment of aspects of the present invention. The arrangement provides an interconnecting radial network with a fault 60 associated with a low level connection or connection to a bus bar 61. During a non faulted operation a controller continuously scans a generation point or seed fault current flow detector AAA. If the fault current flow detector AAA provides a level signal which is high the controller then scans the fault current flow detectors at each of the branches directly feeding to the connection associated with the seed fault current flow detector AAA. The controller in the embodiment depicted in figure 6 detects at fault current flow detector BBB a high level signal and will provide that signal to the controller and so the controller then scans all the branches directly feeding to the connection in the electrical distribution network associated with the fault current flow detector BBB. In these branches a fault current flow detector CCC again provides a high level signal so that the process will continue to search in the same manner as described above by looking at each branch from that connection associated with the fault current flow detector CCC. In such circumstances the process will consider the fault current flow detector DDD which again shows a high level signal. However, the connection associated with the fault current flow detector DDD has no further branching and therefore the controller will provide a fault signal to the connection typically through the fault current flow detector DDD in order to trip a circuit breaker at that point to isolate the fault 60. For illustration purposes if the fault occurred at the branch associated with the fault current flow detector CCC rather than the branch associated with the fault current flow detector DDD then the process would detect that no fault current flow detectors at the branches feeding to the connection associated with fault current flow detector CCC gave a level signal indicating a fault and therefore the controller sends a fault signal to a circuit breaker associated with the connection defined by the fault current flow detector CCC. In the above circumstances again a hierarchy of levels is utilised to allow consideration of the fault path 62 through the cascade of connections defined by bus bar 61 at a low level, bus bar 63 at an intermediate level and bus bar 64 at a higher level between an electrical generator 65 and electrical loads at the lowest level. The process defined by reference to figure 6 in such circumstances is generally an inversion of the previous process described with regard to figure 3. Nevertheless, each fault current flow detector as indicated above will generally be simultaneously or sequentially considered over a short time span and through appropriate electronic configuration considered in terms of locating the fault.

A particular advantage with regard to the embodiment depicted above with respect to figure 6 is that the process requires pre-programming to enable the cascade through branching sequentially through the hierarchy of levels to be achieved. Such pre-programming may be difficult to generalise and such arrangements and systems would therefore require reconfiguration each time a network topology was changed.

A further potential process with respect to utilisation of a controller would depend on combinatorial logic. In such an arrangement or system each fault current flow detector output would be read simultaneously. In such circumstances each fault current flow detector would give a level signal which would preferably be of a binary state, 0 or 1 or provide a level signal to the controller in order to achieve generally such a "yes no" status check. Using such processes a truth table could then be utilised for each circuit breaker condition such that the controller can then ascertain where a fault is located.

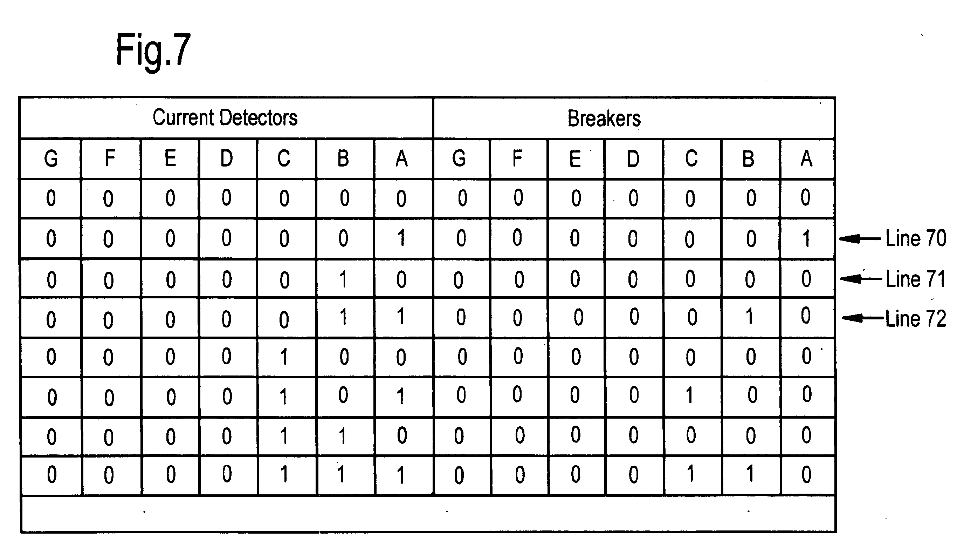

Figure 7 provides the first eight combinations for the electrical distribution network 9 as depicted in figure 2 above. As can be seen by consideration of this table the combinations of fault current flow detectors needed to cause tripping of various circuit breakers can be determined. For example at line 70 it will be noted that if fault current flow detector A' indicates a high level signal then circuit breaker A' will be tripped. However, with regard to line 72 where fault current flow detector A' and fault current flow detector B' show high level signals then circuit breaker B' will be tripped. If only fault current flow detector B', but not fault current flow detector A', shows a high level signal, as shown in line 71, then this signifies a sensor or communications link failure.

Utilisation of a combinatorial logic with regard to a process in accordance with aspects of the present invention does not need consideration of all combinations. Only a finite number of credible protection arrangement configurations are possible. Such an approach would act to reduce complexity when implementing an arrangement or method in accordance with aspects of the present invention. For example, within the electrical distribution network as depicted in figure 2, if a fault is located at the low level bus 15 the process will not take into account the level signal from fault current flow detector B'. This level signal from fault current flow detector B' can be considered a "don't care" value in the process in accordance with aspects of the present invention. In such circumstances consideration of the process for all eventualities will give a capability to detect sensor faults but at the cost of a highly complicated system particularly where there are highly interconnected electrical distribution networks and connection within that electrical distribution network. It will be understood that in order to use a combinatorial logic it is necessary to define information with regard to the actual distribution network system architecture in order to allow the process to proceed.

Aspects of the present invention are particularly applicable to confined electrical distribution networks. These electrical distribution networks can be found in maritime and in particular ship systems. However, electrical protection arrangements and methods in accordance with aspects of the present invention can also be utilised with regard to any radial electrical distribution network and further where the process can be utilised to allow potential extension to interconnect otherwise free standing electrical distribution networks. Thus, aspects of the present invention may be utilised in aeronautical electrical networks, islanded power grids and land based power grids.

Modifications and alteration to aspects of the present invention will be appreciated by persons skilled in the technology. Thus as indicated aspects of the present invention provide an electrical protection arrangement and method which has flexibility for determining location of a fault without consideration of the overall topography of the electrical distribution network or in some situations knowledge of that topography. The method or arrangement will allow isolation to occur to the smallest proportion of the electrical distribution network necessary to allow continued operation of the remainder of the electrical distribution network. This approach allows greater flexibility with regard to operation of electrical distribution networks but as indicated above can add to costs and complexity. In such circumstances it may be possible to combine aspects of the present invention at certain levels within an electrical distribution network and typically the higher levels whilst lower levels operate with simple fuse or traditional relay/circuit breaker combinations to isolate such small parts of the electrical distribution network from the remainder without the necessity of communications links and relatively sophisticated fault current flow detectors.

## Claims

1. An electrical distribution network (9) having an electrical protection arrangement, the electrical distribution network (9) having a cascade of connections (A, B, C, D, E, F, G) between an electrical source/electrical generator (10) and an electrical load (11, 12, 13), the cascade of connections (A, B, C, D, E, F, G) being arranged in a hierarchy of levels (18, 19, 20, 21) defined by respective connections (A,B,C,D,E,F,G) to the electrical distribution network (9), each level (18, 19, 20, 21) in the hierarchy of levels (18, 19, 20, 21) comprising at least one connection (A,B,C,D,E,F,G), the electrical protection arrangement comprising a plurality of electrical current flow detectors (A',B',C',D',E',F',G'), a plurality of circuit breakers (A',B',C',D',E',F',G') and a controller, each connection (A,B,C,D,E,F,G) having an associated circuit breaker (A',B',C',D',E',F',G') and an associated electrical current flow detector (A',B',C',D',E',F',G') for determining the electrical current flow at the connection (A,B,C,D,E,F,G) and being arranged to provide a level signal to the controller, the controller being arranged to analyse the level signals from the electrical current flow detectors (A',B',C',D',E',F',G') in at least one level (18,19,20,21) in the hierarchy of levels (18,19,20,21), the controller being arranged to provide a fault signal to the circuit breaker (A',B',C',D',E',F',G') associated with a particular connection (A,B,C,D,E,F,G) to isolate the electrical distribution network (9) at the particular connection (A,B,C,D,E,F,G) if the controller determines that the level signal provided by the associated electrical current flow detector (A',B',C',D',E',F',G') indicates a fault at the particular connection (A,B,C,D,E,F,G) and each electrical current flow detector (A',B',C',D',E',F',G') being directly associated with the circuit breaker (A',B',C',D',E',F',G') at its associated connection (A,B,C,D,E,F,G), each electrical current flow detector (A',B',C',D',E',F',G') having a timer and a comparator whereby if the level signal is above a threshold value for a predetermined time as determined by the timer the electrical current flow detector (A',B',C',D',E',F',G') being arranged to provide a trip signal to the circuit breaker (A',B',C',D',E',F',G') to isolate the electrical distribution network (9) at the associated connection (A,B,C,D,E,F,G).

2. An arrangement as claimed in claim 1 wherein the controller is arranged to analyse the level signals from the electrical current flow detectors (A',B',C',D',E',F',G') sequentially through the hierarchy of levels (18,19,20,21).

3. An arrangement as claimed in claim 1 or claim 2 wherein the controller is arranged to analyse the level signals from the electrical current flow detectors (A',B',C',D',E',F',G') simultaneously through the hierarchy of levels (18,19,20,21).

4. An arrangement as claimed in any of claims 1 to 3 wherein a connection (A,B,C,D,E,F,G) connects the electrical distribution network (9) to an electrical load (11,12,13), an electrical transformer (16) or an electrical generator (10).

5. An arrangement as claimed in any preceding claim wherein the hierarchy of levels (18,19,20,21) comprises a plurality of levels (18,19,20,21) between the electrical source/electrical generator (10) and the electrical load (11,12,13).

6. An arrangement as claimed in any preceding claim wherein the electrical current flow detector (A',B',C',D',E',F',G') is arranged to determine the direction of electrical current flow.

7. An arrangement as claimed in any preceding claim wherein the level signal is binary.

8. An arrangement as claimed in any preceding claim wherein the electrical current flow detector (A',B',C',D',E',F',G') has an electrical current flow filter.

9. An arrangement as claimed in claim 8 wherein the flow filter is a harmonic filter for electrical current.

10. An arrangement as claimed in any preceding claim wherein the controller is arranged to terminate the analysis when the fault signal is provided by the controller to a circuit breaker (A',B',C',D',E',F',G').

11. An arrangement as claimed in any preceding claim wherein the circuit breaker (A',B',C',D',E',F',G') is a mechanical switch or a solid state switch.

12. An arrangement as claimed in any preceding claim wherein the controller is arranged to repeat the analysis of the level signal a number of times for confirmation prior to providing the fault signal.

13. An arrangement as claimed in any preceding claim wherein the controller is arranged to analyse the level signal for each electrical current flow detector (A',B',C',D',E',F',G') at predetermined time intervals.

14. An arrangement as claimed in any preceding claim wherein at least one level in the hierarchy of levels has a tie line breaker (B3).

15. An arrangement as claimed in any preceding claim wherein the controller is arranged to provide a fault signal to more than one circuit breaker (A',B',C',D',E',F',G').

16. An arrangement as claimed in any preceding claim wherein the predetermined time for each electrical current flow detector (A',B',C',D',E',F',G') in a level (18,19,20,21) is the same.

17. An arrangement as claimed in any preceding claim wherein the predetermined time for each electrical current flow detector (A',B',C',D',E',F',G') in a level (18,19,20,21) is different from the predetermined time for electrical current flow detectors (A',B',C',D',E',F',G') in other levels (18,19,20,21) of the hierarchy of levels (18, 19, 20, 21).

18. A method of providing electrical protection in an electrical distribution network (9), the electrical distribution network (9) having a cascade of connections (A,B,C,D,E,F,G) between an electrical source/electrical generator (10) and an electrical load (11,12,13), each connection (A,B,C,D,E,F,G) having an associated circuit breaker (A',B',C',D',E',F',G'), the method comprising arranging the cascade of connections (A,B,C,D,E,F,G) in a hierarchy of levels defined by respective connections (A,B,C,D,E,F,G) to the electrical distribution network (9), each level (18,19,20,21) in the hierarchy of levels comprising at least one connection (A,B,C,D,E,F,G), determining an electrical current flow (A',B',C',D',E',F',G') at each connection (A,B,C,D,E,F,G) and providing a level signal for each connection (A,B,C,D,E,F,G), analysing the level signals for the connections (A,B,C,D,E,F,G) in at least one level (18,19,20,21) of the hierarchy of levels, providing a fault signal to the circuit breaker (A',B',C',D',E',F',G') associated with a particular connection (A,B,C,D,E,F,G) to isolate the electrical distribution network (9) at the particular connection (A,B,C,D,E,F,G) if it is determined that the level signal provided for the particular connection (A,B,C,D,E,F,G) indicates a fault at the particular connection (A,B,C,D,E,F,G), and determining (A',B',C',D',E',F',G') if the level signal at each connection (A,B,C,D,E,F,G) is above a threshold value for a predetermined time and if the level signal is above the threshold value for the predetermined time providing a trip signal to the circuit breaker (A',B',C',D',E',F',G') to isolate the electrical distribution network (9) at the associated connection (A,B,C,D,E,F,G).

## Patentansprüche

1. Elektrisches Verteilungsnetzwerk (9) mit einer elektrischen Schutzeinrichtung, wobei das Verteilungsnetzwerk (9) eine Kaskade von Verbindungen (A, B, C, D, E, F, G) zwischen einer elektrischen Quelle / einem elektrischen Generator (10) und einer elektrischen Last (11, 12, 13) aufweist, wobei die Kaskade von Verbindungen (A, B, C, D, E, F, G) in einer Hierarchie von Pegeln (18, 19, 20, 21) angeordnet ist, die durch jeweilige Verbindungen (A, B, C, D, F, G) mit dem elektrischen Verteilungsnetzwerk (9) definiert sind, wobei jeder Pegel (18, 19, 20, 21) in der Hierarchie von Pegeln (18, 19, 20, 21) mindestens eine Verbindung (A, B, C, D, E, F, G) umfaßt, wobei weiter die elektrische Schutzeinrichtung eine Mehrzahl elektrischer Stromflußdetektoren (A', B', C', D', E', F', G'), eine Mehrzahl von Ausschaltern (A' B', C', D', E', F', G'), und eine Steuerung umfaßt, jede Verbindung (A, B, C, D, E, F, G) einen zugeordneten Ausschalter (A', B', C', D', E', F', G') und einen zugeordneten elektrischen Stromflußdetektor (A', B', C', D', E', F', G') zur Bestimmung des elektrischen Stromflusses an der Verbindung (A, B, C, D, E, F, G) aufweist und dafür angeordnet ist, ein Pegelsignal an die Steuerung zu erzeugen, die Steuerung dafür ausgelegt ist, die Pegelsignale von den elektrischen Stromflußdetektoren (A', B', C', D', E', F', G') auf mindestens einem Pegel (18, 19, 20, 21) in der Hierarchie von Pegeln (18, 19, 20, 21) zu analysieren, die Steuerung dafür ausgelegt ist, ein Fehlersignal an den Ausschalter (A',B',C',D',E',F',G') zu erzeugen, der einer jeweiligen Verbindung (A, B, C, D, E, F, G) zugeordnet ist, um das elektrische Verteilungsnetzwerk (9) an der jeweiligen Verbindung (A, B, C, D, E, F, G) zu trennen, wenn die Steuerung feststellt, dass das von dem zugeordneten elektrischen Stromflußdetektor (A', B', C', D', E', F', G') erzeugte Pegelsignal einen Fehler an der jeweiligen Verbindung (A, B, C, D, E, F, G) anzeigt, und jeder elektrische Stromflußdetektor (A', B', C', D', E', F', G') direkt dem Ausschalter (A', B', C', D', E', F', G') an seiner zugehörigen Verbindung (A, B, C, D, E, F, G) zugeordnet ist, und jeder elektrische Stromflußdetektor (A', B', C', D', E', F', G') einen Zeitgeber und einen Vergleicher aufweist, wodurch, wenn das Pegelsignal oberhalb eines Schwellenwerts für eine vom Zeitgeber bestimmte vorgegebene Zeit liegt, der elektrische Stromflußdetektor (A', B', C', D', E', F', G') ein Auslösesignal an den Ausschalter (A', B', C', D', E', F', G') anlegt, um das elektrische Verteilungsnetzwerk (9) an der zugeordneten Verbindung (A, B, C, D, E, F, G) zu trennen.

2. Anordnung nach Anspruch 1, wobei die Steuerung dafür ausgelegt ist, die Pegelsignale von dem elektrischen Stromflußdetektoren (A', B', C', D', E', F', G') sequenziell durch die Hierarchie von Pegeln (18, 19, 20, 21) zu analysieren.

3. Anordnung nach Anspruch 1 oder Anspruch 2, wobei die Steuerung dafür ausgelegt ist, die Pegelsignale von den elektrischen Stromflußdetektoren (A',B',C',D',E',F'G') gleichzeitig durch die Hierarchie von Pegeln (18, 19, 20, 21) zu analysieren.

4. Anordnung nach einem der Ansprüche 1 bis 3, wobei eine Verbindung (A, B, C, D, E, F, G) das elektrische Verteilungsnetzwerk (9) mit einer elektrischen Last (11, 12, 13), einem elektrischen Transformator (16), oder einem elektrischen Generator (10) verbindet.

5. Anordnung nach irgendeinem vorhergehenden Anspruch, wobei die Hierarchie von Pegeln (18, 19, 20, 21) eine Mehrzahl von Pegeln (18, 19, 20, 21) zwischen der elektrischen Quelle / dem elektrischen Generator (10) und der elektrischen Last (11, 12, 13) umfaßt.

6. Anordnung nach irgendeinem vorhergehenden Anspruch, wobei der elektrische Stromflußdetektor (A', B', C', D', E', F', G') dafür ausgelegt ist, die Richtung des elektrischen Stromflusses zu bestimmen.

7. Anordnung nach irgendeinem vorhergehenden Anspruch, wobei das Pegelsignal binär ist.

8. Anordnung nach irgendeinem vorhergehenden Anspruch, wobei der elektrische Stromflußdetektor (A', B', C', D', E', F', G') einen elektrischen Stromflußfilter aufweist.

9. Anordnung nach Anspruch 8, wobei das Flußfilter ein harmonisches Filter für elektrischen Strom ist.

10. Anordnung nach irgendeinem vorhergehenden Anspruch, wobei die Steuerung dafür ausgelegt ist, die Analyse zu beendigen, wenn das Fehlersignal durch die Steuerung an einen Ausschalter (A', B', C', D', E', F', G') angelegt wird.

11. Anordnung nach irgendeinem vorhergehenden Anspruch, wobei der Auschalter (A', B', C', D', E', F', G') ein mechanischer Schalter oder ein Festkörperschalter ist.

12. Anordnung nach irgendeinem vorhergehenden Anspruch, wobei die Steuerung dafür ausgelegt ist, die Analyse des Pegelsignals eine Anzahl von Malen zur Bestätigung zu wiederholen, bevor das Fehlersignal bereitgestellt wird.

13. Anordnung nach irgendeinem vorhergehenden Anspruch, wobei die Steuerung dafür ausgelegt ist, das Pegelsignal für jeden elektrischen Stromflußdetektor (A',B',C',D', E',F',G') in vorgegebenen Zeitintervallen zu analysieren.

14. Anordnung nach irgendeinem vorhergehenden Anspruch, wobei mindestens ein Pegel in der Hierarchie von Pegeln einen Verbundleitungsschalter (B3) aufweist.

15. Anordnung nach irgendeinem vorhergehenden Anspruch, wobei die Steuerung dafür ausgelegt ist, ein Fehlersignal an mehr als einen Ausschalter (A', B', C', D', E', F', G') anzulegen.

16. Anordnung nach irgendeinem vorhergehenden Anspruch, wobei die vorgegebene Zeit für jeden elektrischen Stromflußdetektor (A', B', C', D', E', F', G') in einem Pegel (18, 19, 20, 21) die gleiche ist.

17. Anordnung nach irgendeinem vorhergehenden Anspruch, wobei die vorgegebene Zeit für jeden elektrischen Stromflußdetektor (A', B', C', D', E', F', G') auf einem Pegel (18, 19, 20, 21) verschieden von der vorgegebenen Zeit für elektrische Stromflußdetektoren (A', B', C', D', E', F', G') auf anderen Pegeln (18, 19, 20, 21) der Hierarchie von Pegeln (18, 19, 20, 21) ist.

18. Verfahren zum Herstellen eines elektrischen Schutzes in einem elektrischen Verteilungsnetzwerk (9), wobei das elektrische Verteilungsnetzwerk (9) eine Kaskade von Verbindungen (A, B, C, D, E, F, G) zwischen einer elektrischen Quelle / einem elektrischen Generator (10) und einer elektrischen Last (11, 12, 13) aufweist, jede Verbindung (A, B, C, D, E, F, G) einen zugeordneten Ausschalter (A', B', C', D', E', F', G') aufweist, und wobei das Verfahren umfaßt das Anordnen der Kaskade von Verbindungen (A, B, C, D, E, F, G) in einer Hierarchie von Pegeln, die durch jeweilige Verbindungen (A, B, C, D, E, F, G) mit dem elektrischen Verteilungsnetzwerk (9) definiert sind, jeder Pegel (18, 19, 20, 21) in der Hierarchie von Pegeln mindestens eine Verbindung (A, B, C, D, E, F, G) aufweist, das Bestimmen eines elektrischen Stromflusses (A', B', C', D', E', F', G') an jeder Verbindung (A, B, C, D, E, F, G) und Bereitstellen eines Pegelsignals für jede Verbindung (A, B, C, D, E, F, G), das Analysieren der Pegelsignale für die Verbindungen (A, B, C, D, E, F, G) auf mindestens einem Pegel (18, 19, 20, 21) in der Hierarchie von Pegeln, das Bereitstellen eines Fehlersignals zu einem Ausschalter (A', B', C', D', E', F', G'), der einer jeweiligen Verbindung (A, B, C, D, E, F, G) zugeordnet ist, um das elektrische Verteilungsnetzwerk (9) an der jeweiligen Verbindung (A, B, C, D, E, F, G) zu trennen, wenn festgestellt wird, dass das für die jeweilige Verbindung (A, B, C, D, E, F, G) bereitgestellte Pegelsignal einen Fehler an der jeweiligen Verbindung (A, B, C, D, E, F, G) anzeigt, und das Feststellen (A', B', C', D', E', F', G'), ob das Pegelsignal an jeder Verbindung (A, B, C, D, E, F, G) oberhalb eines Schwellenwerts für eine vorgegebene Zeit liegt, und wenn das Pegelsignal oberhalb des Schwellenwerts für eine vorgegebene Zeit liegt, das Bereitstellen eines Auslösesignals an einen Ausschalter (A', B',C',D',E',F',G') zum Trennen des elektrischen Verteilungsnetzwerks (9) an der zugeordneten Verbindung (A, B, C, D, E, F, G).

## Revendications

1. Réseau de distribution électrique (9) ayant un agencement de protection électrique, le réseau de distribution électrique (9) ayant une cascade de connexions (A, B, C, D, E, F, G) entre une source électrique/un générateur électrique (10) et une charge électrique (11, 12, 13), la cascade de connexions (A, B, C, D, E, F, G) étant agencée selon une hiérarchie de niveaux (18, 19, 20, 21) définie par des connexions respectives (A, B, C, D, E, F, G) au réseau de distribution électrique (9), chaque niveau (18, 19, 20, 21) dans la hiérarchie de niveaux (18, 19, 20, 21) comprenant au moins une connexion (A, B, C, D, E, F, G), l'agencement de protection électrique comprenant une pluralité de détecteurs de flux de courant électrique (A', B', C', D', E', F', G'), une pluralité de disjoncteurs (A', B', C', D', E', F', G') et un dispositif de commande, chaque connexion (A, B, C, D, E, F, G) ayant un disjoncteur associé (A', B', C', D', E', F', G') et un détecteur de flux de courant électrique associé (A', B', C', D', E', F', G') pour déterminer le flux de courant électrique au niveau de la connexion (A, B, C, D, E, F, G) et étant agencé pour fournir un signal de niveau au dispositif de commande, le dispositif de commande étant agencé pour analyser les signaux de niveau provenant des détecteurs de flux de courant électrique (A', B', C', D', E', F', G') dans au moins un niveau (18, 19, 20, 21) dans la hiérarchie de niveaux (18, 19, 20, 21), le dispositif de commande étant agencé pour fournir un signal d'anomalie au disjoncteur (A', B', C', D', E', F', G') associé à une connexion particulière (A, B, C, D, E, F, G) pour isoler le réseau de distribution électrique (9) au niveau de la connexion particulière (A, B, C, D, E, F, G) si le dispositif de commande détermine que le signal de niveau fourni par le détecteur de flux de courant électrique associé (A', B', C', D', E', F', G') indique une anomalie au niveau de la connexion particulière (A, B, C, D, E, F, G) et chaque détecteur de flux de courant électrique (A', B', C', D', E', F', G') étant directement associé au disjoncteur (A', B', C', D', E', F', G') au niveau de sa connexion associée (A, B, C, D, E, F, G), chaque détecteur de flux de courant électrique (A', B', C', D', E', F', G') ayant un temporisateur et un comparateur moyennant quoi, si le signal de niveau est au-dessus d'une valeur seuil pour un temps prédéterminé tel que déterminé par le temporisateur, le détecteur de flux de courant électrique (A', B', C', D', E', F', G') étant agencé pour fournir un signal de déclenchement au disjoncteur (A', B', C', D', E', F', G') pour isoler le réseau de distribution électrique (9) au niveau de la connexion associée (A, B, C, D, E, F, G).

2. Agencement tel que revendiqué dans la revendication 1, dans lequel le dispositif de commande est agencé pour analyser les signaux de niveau provenant des détecteurs de flux de courant électrique (A', B', C', D', E', F', G') de manière séquentielle à travers la hiérarchie de niveaux (18, 19, 20, 21).

3. Agencement tel que revendiqué dans la revendication 1 ou 2, dans lequel le dispositif de commande est agencé pour analyser les signaux de niveau provenant des détecteurs de flux de courant électrique (A', B', C', D', E', F', G') simultanément à travers la hiérarchie de niveaux (18, 19, 20, 21).

4. Agencement tel que revendiqué dans l'une des revendications 1 à 3, dans lequel une connexion (A, B, C, D, E, F, G) relie le réseau de distribution électrique (9) à une charge électrique (11, 12, 13), un transformateur électrique (16) ou un générateur électrique (10).

5. Agencement tel que revendiqué dans l'une des revendications précédentes, dans lequel la hiérarchie de niveaux (18, 19, 20, 21) comprend une pluralité de niveaux (18, 19, 20, 21) entre la source électrique/le générateur électrique (10) et la charge électrique (11, 12, 13).

6. Agencement tel que revendiqué dans l'une des revendications précédentes, dans lequel le détecteur de flux de courant électrique (A',B',C', D', E', F', G') est agencé pour déterminer la direction du flux de courant électrique.

7. Agencement tel que revendiqué dans l'une des revendications précédentes, dans lequel le signal de niveau est binaire.

8. Agencement tel que revendiqué dans l'une des revendications précédentes, dans lequel le détecteur de flux de courant électrique (A', B', C', D', E', F', G') comporte un filtre de flux de courant électrique.

9. Agencement tel que revendiqué dans la revendication 8, dans lequel le filtre de flux est un filtre d'harmoniques pour courant électrique.

10. Agencement tel que revendiqué dans l'une des revendications précédentes, dans lequel le dispositif de commande est agencé pour mettre fin à l'analyse lorsque le signal d'anomalie est fourni, par le dispositif de commande, à un disjoncteur (A', B', C', D', E', F', G').

11. Agencement tel que revendiqué dans l'une des revendications précédentes, dans lequel le disjoncteur (A', B', C', D', E', F', G') est un commutateur mécanique ou un commutateur à semi-conducteurs.

12. Agencement tel que revendiqué dans l'une des revendications précédentes, dans lequel le dispositif de commande est agencé pour répéter l'analyse du signal de niveau un certain nombre de fois pour une confirmation avant de fournir le signal d'anomalie.

13. Agencement tel que revendiqué dans l'une des revendications précédentes, dans lequel le dispositif de commande est agencé pour analyser le signal de niveau pour chaque détecteur de flux de courant électrique (A', B', C', D', E', F', G') à des intervalles de temps prédéterminés.

14. Agencement tel que revendiqué dans l'une des revendications précédentes, dans lequel au moins un niveau dans la hiérarchie de niveaux a un coupeur de ligne (B3).

15. Agencement tel que revendiqué dans l'une des revendications précédentes, dans lequel le dispositif de commande est agencé pour fournir un signal d'anomalie à plus d'un disjoncteur (A', B', C', D', E', F', G').

16. Agencement tel que revendiqué dans l'une des revendications précédentes, dans lequel le temps prédéterminé pour chaque détecteur de flux de courant électrique (A', B', C', D', E', F', G') dans un niveau (18, 19, 20, 21) est le même.

17. Agencement tel que revendiqué dans l'une des revendications précédentes, dans lequel le temps prédéterminé pour chaque détecteur de flux de courant électrique (A', B', C', D', E', F', G') dans un niveau (18, 19, 20, 21) est différent du temps prédéterminé pour des détecteurs de flux de courant électrique (A', B', C', D', E', F', G') dans d'autres niveaux (18, 19, 20, 21) de la hiérarchie de niveaux (18, 19, 20, 21).

18. Procédé permettant de fournir une protection électrique dans un réseau de distribution électrique (9), le réseau de distribution électrique (9) ayant une cascade de connexions (A, B, C, D, E, F, G) entre une source électrique/un générateur électrique (10) et une charge électrique (11, 12, 13), chaque connexion (A, B, C, D, E, F, G) ayant un disjoncteur associé (A', B', C', D', E', F', G'), le procédé comprenant le fait d'agencer la cascade de connexions (A, B, C, D, E, F, G) selon une hiérarchie de niveaux définie par des connexions respectives (A, B, C, D, E, F, G) au réseau de distribution électrique (9), chaque niveau (18, 19, 20, 21) dans la hiérarchie de niveaux comprenant au moins une connexion (A, B, C, D, E, F, G), de déterminer un flux de courant électrique (A', B', C', D', E', F', G') au niveau de chaque connexion (A, B, C, D, E, F, G) et de fournir un signal de niveau pour chaque connexion (A, B, C, D, E, F, G), d'analyser les signaux de niveau pour les connexions (A, B, C, D, E, F, G) dans au moins un niveau (18, 19, 20, 21) de la hiérarchie de niveaux, de fournir un signal d'anomalie au disjoncteur (A', B', C', D', E', F', G') associé à une connexion particulière (A, B, C, D, E, F, G) pour isoler le réseau de distribution électrique (9) au niveau de la connexion particulière (A, B, C, D, E, F, G) s'il est déterminé que le signal de niveau fourni pour la connexion particulière (A, B, C, D, E, F, G) indique une anomalie au niveau de la connexion particulière (A, B, C, D, E, F, G), et de déterminer (A', B', C', D', E', F', G') si le signal de niveau au niveau de chaque connexion (A, B, C, D, E, F, G) est au-dessus d'une valeur seuil pour un temps prédéterminé et de fournir, si le signal de niveau est au-dessus de la valeur seuil pour le temps prédéterminé, un signal de déclenchement au disjoncteur (A', B', C', D', E', F', G') pour isoler le réseau de distribution électrique (9) au niveau de la connexion associée (A, B, C, D, E, F, G).
